(19) Europäisches Patentamt
European Patent Office
Office européen des brevets

(11) Numéro de publication: **0 347 277 B1**

(12) **FASCICULE DE BREVET EUROPEEN**

(45) Date de publication de fascicule du brevet: **22.09.93** (51) Int. Cl.5: **G01D 5/26**, G01L 9/00

(21) Numéro de dépôt: **89401518.9**

(22) Date de dépôt: **02.06.89**

(54) Capteur interférométrique et son utilisation dans un dispositif interférométrique.

(30) Priorité: **03.06.88 FR 8807389**

(43) Date de publication de la demande:
**20.12.89 Bulletin 89/51**

(45) Mention de la délivrance du brevet:
**22.09.93 Bulletin 93/38**

(84) Etats contractants désignés:
**AT BE CH DE ES FR GB GR IT LI LU NL SE**

(56) Documents cités:
**DE-C- 3 611 119
FR-A- 2 595 820
US-A- 4 430 565
US-A- 4 596 466**

(73) Titulaire: **ELF AOUITAINE PRODUCTION
Tour Elf 2 Place de la Coupole La Défense 6
F-92400 Courbevoie(FR)**

(72) Inventeur: **Jouve, Philippe
1, Rue J.B. Bégarie
F-64530 Pontacq(FR)**
Inventeur: **Robert, François-Marie
La Parmigiana Avenue Beausoleil
F-64320 Bizanos(FR)**
Inventeur: **Pouleau, Jacques
12 Allée Samsarricq
F-64320 Bizanos(FR)**
Inventeur: **Desforges, Xavier
7 Square Palissy
F-78330 Fontenay Le Fleury(FR)**

(74) Mandataire: **Debay, Yves
Cabinet Yves Debay, 122 Elysee 2
F-78170 La Celle Saint Cloud (FR)**

EP 0 347 277 B1

# Description

La présente invention concerne un capteur interférométrique double, série ou parallèle, et son utilisation dans un dispositif optique interférométrique pour déterminer en un ou plusieurs points une ou plusieurs grandeurs physiques, telles que la pression et la température, pouvant se traduire sur des capteurs interférométriques à deux ondes en terme de différence de trajets optiques.

La demande de brevet FR 2 595 820 décrit un dispositif optique interférométrique pouvant comporter plusieurs interféromètres de mesure montés de façon multiplexée soit en série, soit en parallèle pour mesurer des paramètres physiques dont les conditions de mesure peuvent varier d'un point à l'autre.

Les besoins industriels en matière de capteurs tout optique sont énormes et l'arrivée sur le marché de fibres optiques industriellement fiables pour conduire des faisceaux lumineux sur de longues distances a permis d'envisager la réalisation de capteurs optiques industriels permettant de répondre à un certain nombres d'impératifs particulièrement sensibles en milieu pétrolier : mesures à longues distances, sécurité intrinsèque, faible volume, insensibilité aux perturbations électromagnétiques et possibilité de multiplexage.

Un premier but est de proposer un capteur présentant l'avantage de pouvoir effectuer des mesures précises.

Ce premier but est atteint par le fait que le capteur interférométrique est caractérisé en ce qu'il comprend deux interféromètres dans une enveloppe étanche (116) sous vide, le premier interféromètre formant une des faces de l'enveloppe et permettant la fourniture d'un signal représentatif de deux paramètres physiques, le deuxième interféromètre disposé dans l'enveloppe étanche permettant la fourniture d'un signal représentatif d'un seul des paramètres physiques.

Un deuxième but est de proposer un capteur interféromètrique double dans lequel les spectres cannelés liés aux variations de température et de pression s'additionnent.

Selon une première variante, ce deuxième but est atteint par le fait que le capteur interférométrique est parallèle, homogène de type Fabry-Perrot et et que lesdits deux interféromètres sont en parallèle utilisant des faisceaux de lumière concentriques central et extérieur issus d'une fibre optique placée au foyer d'une lentille collimatrice, le premier interféromètre utilisant un faisceau central comporte une membrane déformable dont la déformation est sensible à la pression et à la température qui font varier sa position par rapport à l'une des faces d'une première lame de verre à faces parallèles en fonction de la pression et de la température,

re, le deuxième interféromètre sur le trajet du faisceau extérieur est constitué d'un interféromètre dans lequel la distance entre deux faces de deux lames de verre à faces parallèles maintenues par une entretoise cylindrique varie en fonction des coefficients de dilatation différents de chacune de ces deux lames, la lentille collimatrice des deux faisceaux de lumière en direction d'une fibre optique, ces deux faisceaux optiques ayant deux différences de marche différentes créant chacun un spectre cannelé de la source, chaque spectre se recombinant en s'additionnant vers la fibre optique.

Une deuxième variante peut être constituée d'un capteur double parallèle mixte.

Selon cette deuxième variante le deuxième but est atteint par le fait que le capteur interférométrique est mixte, parallèle du type bifringent, Fabry Perrot et que lesdits deux interféromètres sont en parallèle et utilisent des faisceaux de lumière concentrique, central (A) et extérieur (B) issus d'une fibre optique placée au foyer d'une lentille collimatrice, le premier interféromètre utilisant un faisceau central (A) comporte une membrane déformable dont la déformation est sensible à la pression et à la température qui font varier sa position par rapport à l'une des faces d'une première lame de verre à faces parallèles en fonction de la pression et de la température, le deuxième interféromètre sur le trajet du faisceau extérieur (B) est constitué par un polariseur et une lame biréfringente dont la bi-réfringence varie en fonction de la température pour créer un spectre cannelé qui est focalisé sur la fibre optique par la lentille collimatrice pour se recombiner en s'additionnant avec le spectre cannelé du faisceau central.

Selon une troisième variante du deuxième but, le capteur double peut être mixte parallèle par association d'un interféromètre bi-réfringent sensible à la pression et d'un interféromètre de Fabry-Perrot sensible à la température.

Selon cette troisième variante, le deuxième but est atteint par le fait que le capteur interférométrique est mixte, parallèle, du type Fabry Perrot, biréfringent et que lesdits deux interféromètres en parallèle et utilisent des faisceaux de lumière concentrique central (A) et extérieur (B) issus d'une fibre optique placée au foyer d'une lentille collimatrice, le premier interféromètre utilisant le faisceau central (A) comporte un polariseur et une lame biréfringente dont la bi-réfringence varie principalement en fonction de la pression, le deuxième interféromètre sur le trajet du faisceau extérieur (B) est constitué, d'un interféromètre dans lequel la distance entre deux faces de deux lames de verre à faces parallèles maintenues par une entretoise cylindrique varie en fonction des coefficients de dilatation différents de chacune de ces deux lames.

Selon une quatrième variante du deuxième but, le capteur double peut être homogène-parallèle par association de deux interféromètres bi-réfringents.

Selon cette quatrième variante, le deuxième but est atteint par le fait que le capteur interférométrique est homogène parallèle du type biréfringent et que lesdits deux interféromètres en sont en parallèle et utilisent des faisceaux de lumière concentrique central (A) et extérieur (B) issus d'une fibre optique placée au foyer d'une lentille collimatrice, le premier interféromètre utilisant le faisceau central (A) comporte un polariseur et une lame biréfringente dont la bi-réfringence varie principalement en fonction de la pression, le deuxième interféromètre sur le trajet du faisceau extérieur (B) est constitué d'un second polariseur et d'une seconde lame bi-réfringente dont la bi-réfringence varie en fonction de la température pour créer un spectre cannelé qui est focalisé sur la fibre optique par la lentille collimatrice pour se recombiner en s'additionnant avec le spectre cannelé du faisceau central.

Un troisième but de l'invention est de proposer un capteur interférométrique double dans lequel les spectres cannelés liés aux variations de pression et de température se multiplient.

Selon une première variante, ce troisième but est atteint par le fait que le capteur interférométrique est homogène série du type biréfringent et que lesdits deux interféromètres sont en série et utilisent un seul faisceau lumineux issu d'une fibre optique placée au foyer d'une lentille collimatrice (211, le premier interféromètre étant constitué d'une membrane déformable (215) dont la déformation est sensible à la pression et à la température qui font varier sa position par rapport à l'une des faces d'une première lame (23) de verre à faces parallèles en fonction de la pression et de la température de façon à obtenir une différence de chemin optique caractéristique de la position de la membrane et créant un spectre cannelé de la source, le second interféromètre sur le trajet lumineux est constitué par un polariseur (27) et une lame bi-réfringente (26) dont la bi-réfringence varie en fonction de la température pour créer, après avoir été traversé deux fois à l'aller et au retour, par différence de marche un spectre cannelé, le spectre cannelé résultant, étant le produit des spectres cannelés de chacun des interféromètres, est focalisé sur la fibre optique (213) par la lentille collimatrice (211).

Dans une deuxième variante de ce troisième but, le capteur double est mixte série par association de deux interféromètres Fabry-Perrot.

Selon cette deuxième variante, le troisième but est atteint par le fait que le capteur interférométrique est mixte série du type Fabry Perrot biréfringent et que lesdits deux interféromètres sont en série et utilisent un seul faisceau lumineux issu d'un filtre optique placé au foyer d'une lentille collimatrice, le premier interféromètre étant constitué d'une membrane déformable dont la déformation est sensible à la pression et à la température qui font varier sa position par rapport à une des faces d'une première lame de verre à faces parallèles en fonction de ces deux paramètres, de façon à obtenir une différence de chemin optique caractéristique de la membrane et créant un spectre cannelé de la source, le second interféromètre dans lequel la distance entre deux faces de deux lames de verre à faces parallèles varie en fonction des coefficients de dilatation différents de chacune de ces deux lames utilise le faisceau sortant du premier, le spectre cannelé résultant étant focalisé sur la fibre optique par la lentille collimatrice.

Selon une troisième variante, un capteur double mixte série peut être obtenu par association d'un interféromètre bi-réfringent sensible à la pression et d'un interféromètre Fabry-Perrot.

Selon cette troisième variante, le troisième but est atteint par le fait que le capteur interférométrique est mixte série du type biréfringent Fabry Perrot et que lesdits deux interféromètres sont en série et utilisent un seul faisceau lumineux issu d'une fibre optique placée au foyer d'une lentille collimatrice, le premier interféromètre étant constitué par un polariseur et une lame bi-réfringente dont la bi-réfringence varie principalement en fonction de la pression, le second interféromètre sur le trajet lumineux est constitué d'un interféromètre dans lequel la distance entre deux faces de deux lames de verre à faces parallèles maintenues par une entretoise cylindrique varie en fonction des coefficients de dilatation différents de chacune de ces deux lames.

Selon une quatrième variante, un capteur double homogène série peut être obtenu par association de deux interféromètres bi-réfringents en série.

Selon cette quatrième variante, le troisième but est atteint par le fait que le capteur interférométrique est série homogène du type bi-réfringent et que les deux interféromètres sont en série et utilisent un seul faisceau lumineux issu d'une fibre optique placée au foyer d'une lentille collimatrice, le premier interféromètre étant constitué par un polariseur et une lame bi-réfringente dont la bi-réfringence varie principalement en fonction de la pression, le second interféromètre sur le trajet lumineux est constitué d'un second polariseur et d'une seconde lame bi-réfringente dont la bi-réfringence varie en fonction de la température pour créer un spectre cannelé résultant qui est focalisé sur la fibre optique par la lentille collimatrice

Un quatrième but est de proposer une utilisation d'un tel capteur dans un dispositif optique interférométrique.

Dans un dispositif particulier connu, le faisceau lumineux émis par une source lumineuse est conduit par fibre optique jusqu'à un premier interféromètre à 2 ondes fonctionnant par exemple selon le principe de Michelson ; ce faisceau lumineux incident y est divisé, par un système séparateur constitué par une lame semi-réfléchissante, en deux sous-faisceaux dont l'un est réfléchi par un miroir fixe, tandis que l'autre est réfléchi par un miroir mobile dont la position varie ; ces deux sous-faisceaux, après réflexion, sont recombinés au niveau du système séparateur et interfèrent pour donner un flux global, lequel flux global présente un spectre comportant un certain nombre de cannelures dans une bande spectrale donnée. La position de ces cannelures est caractéristique de la différence $D_c$ des trajets optiques suivis par les sous-faisceaux correspondant aux deux miroirs, laquelle différence est liée à la position du miroir mobile : ce flux est amené par fibre optique jusqu'à un deuxième interféromètre, qui joue le rôle d'interféromètre de mesure. L'interféromètre de mesure comporte lui aussi deux miroirs, dont l'un est mobile par rapport à l'autre, et un système séparateur constitué par une lame semi-réfléchissante qui divise la lumière en deux sous-faisceaux ; ceux-ci sont dirigés vers les deux miroirs sur lesquels ils se réfléchissent, puis recombinés au niveau du système séparateur.

L'intensité lumineuse du flux de sortie issu de l'interféromètre de mesure après recombinaison des deux sous-faisceaux, traduit le degré de corrélation entre les réponses optiques de chacun des interféromètres de détection et de mesure. Dans l'interféromètre de mesure, le miroir mobile est déplacé mécaniquement jusqu'à déceler le maximum d'intensité du flux de sortie, lequel maximum témoigne de l'égalité des deux différences de trajets optiques dans les deux interféromètres. La position du miroir mobile de l'interféromètre de mesure correspondant à ce maximum permet ainsi de déterminer la différence de trajet optique de l'interféromètre de détection.

Le brevet américain US 4 596 466 décrit largement une telle réalisation. On peut y relever une possibilité de remplacer les interféromètres de Michelson par des interféromètres de "Fabry-Perrot", constitués de deux miroirs parallèles partiellement transparents placés entre deux lentilles aux extrémités de deux fibres optiques.

Dans les dispositifs connus utilisant un tel interféromètre de mesure, les systèmes utilisés pour déplacer et connaître le déplacement du miroir mobile sont de deux types. Dans un premier type de systèmes le déplacement est connu car on déplace mécaniquement le miroir mobile de l'interféromètre de mesure sur une glissière à billes ou à rouleaux croisés. Outre les problèmes d'encombrement, il existe des problèmes de frottement, de jeu mécanique qui font qu'une précision meilleure que 0,1 micron est difficilement accessible. Or, pour des déplacements faibles du miroir, par exemple 10 microns d'amplitude totale, si l'on veut une grande dynamique de mesure, par exemple de $10^3$ points, il est nécessaire que la sensibilité de mesure de la position du miroir de l'interféromètre soit meilleure que $10^{-2}$ microns.

Dans un deuxième type de systèmes le déplacement est inconnu mais on mesure celui-ci par interférométrie laser sur un interféromètre de mesure, identique à l'interféromètre de détection. La sensibilité sur la mesure de déplacement est fonction des caractéristiques spectrales du laser et peut être nettement meilleure que 0,1 micron, mais la position des franges n'est connue que de manière relative : la mesure nécessite une surveillance continue et sans interruption possible depuis la position du miroir correspondant à une différence de trajet optique nulle jusqu'au déplacement recherché.

Dans d'autres dispositifs connus encore, les déterminations de la variation de la différence des trajets optiques $D_c$ de l'interféromètre de détection ne se fait pas à l'aide d'un interféromètre de mesure mais en effectuant l'analyse spectrale du flux issu de l'interféromètre de détection et en prenant la Transformée de Fourier. Cette analyse spectrale permet d'obtenir la fréquence des franges ainsi que leur phase et de remonter à la valeur absolue de $D_c$. Cette méthode nécessite un matériel de spectrophotométrie pour l'analyse du spectre cannelé, par exemple un monochromateur à réseau, une barrette de diodes et un logiciel dont les algorithmes sont connus mais lourds pour la Transformée de Fourier. D'autre part sa sensibilité n'est pas suffisante compte tenu de l'atténuation que nous allons avoir dans la grande longueur de fibre utilisée, par exemple 6 km aller et retour, pour un puits de production. La précision de ces dispositifs, qui peut atteindre $10^{-3}$ microns, est fonction de l'échantillonnage réalisé sur le spectre, donc de la résolution du spectro-photomètre.

L'invention, en retenant le principe d'analyse à l'aide d'un interféromètre de mesure permet tout en conservant les avantages des dispositifs de l'art antérieur, d'en éliminer les inconvénients, notamment les problèmes liés à l'encombrement et à la précision.

Le dispositif proposé selon l'invention évite notamment l'emploi de pièces mobiles difficiles à règler et n'implique aucune pièce lourde mécanique en mouvement qui augmente le temps nécessaire aux mesures, supprime les risques de mauvais fonctionnement, supprime les problèmes de dérive de grandeurs de référence rencontrés sur les appareils antérieurs avec analyse interférométrique, ainsi que les frottements mécaniques qui limitent la sensibilité.

Le dispositif proposé est simple, robuste, d'encombrement réduit, ne pose pas de problème de reproductibilité de mesure. En plus il permet d'envisager une analyse rapide et fiable, avec une précision égale, de spectres cannelés mélangés correspondant à des différences de chemins optiques différentes $D_{c1}$ et $D_{c2}$ ou encore l'analyse de plusieurs spectres issus d'interféromètres de détection différents ayant des différences de chemins optiques voisines mais analysées séquentiellement. Ce dispositif permet donc l'analyse d'informations provenant d'ensembles de capteurs interférométriques caractérisés par des différences de trajet optiques $D_c$ différentes, chacune traduisant des grandeurs physiques différentes ou non. Le dispositif proposé permet de réaliser une mesure absolue des différences de trajets optiques $D_c$ sur l'interféromètre de mesure.

Ce quatrième but est atteint par le fait que le dispositif optique interférométrique pour la mesure de grandeurs physiques multiples susceptibles de créer des variations de différence de chemins optiques, comportant :

- un dispositif émetteur (a) comprenant au moins une source à bande spectrale large;
- un détecteur constitué par au moins un capteur interférométrique mixte ou homogène à deux interféromètres en série ou en parallèle selon une des revendications 2 à 9 créant un spectre cannelé composite des différences de marches $D_{c1}$, $D_{c2}$ dues à chacun des interféromètres;
- un ensemble (b) de fibres optiques pour véhiculer le flux lumineux du dispositif émetteur (a) à l'ensemble détecteur (c) et le flux lumineux réfléchi par l'ensemble détecteur;
- un dispositif d'analyse (d) pour analyser les informations portées par le flux lumineux issu de l'ensemble détecteur et élaborer une valeur représentative des grandeurs physiques mesurées, lequel dispositif d'analyse comprend :
- un interféromètre de mesure à deux ondes comprenant un collimateur d'entrée (109) éclairé par l'extrémité (z) de la fibre optique, un miroir de référence M1 (169) sur lequel se réfléchit une partie du flux lumineux collimaté fourni par le capteur à deux interféromètres et un second miroir M2 (129) sur lequel se réfléchit l'autre partie dudit flux lumineux collimaté, et des moyens pour faire interférer les deux flux réfléchis sur les miroirs M1 et M2 et donner à la sortie un flux lumineux résultant;
- un détecteur photoélectrique (149) apte à mesurer l'intensité du flux lumineux issu de l'interféromètre de mesure et de fournir un signal représentatif de ladite intensité; et
- un ensemble de traitement (e) du signal issu du détecteur photoélectrique fournissant une valeur représentative des grandeurs physiques, caractérisé en ce que le miroir M2 de l'interféromètre de mesure est fixé sur un micropositionneur-mesureur piézoélectrique (159) pour déplacer finement le miroir M2 et mesurer précisément le déplacement correspondant, et en ce que l'ensemble de traitement est relié non seulement au détecteur photoélectrique mais également au micropositionneur-mesureur pour piloter et déterminer la position absolue du miroir M2 correspondant au maximum d'intensité lumineuse reçue sur le détecteur photoélectrique et en déduire les valeurs des différences de marches Dc1, Dc2 nécessaires à l'élaboration de la ou des grandeurs physiques recherchées;

Selon une caractéristique secondaire le miroir M2 de l'interféromètre de mesure est monté sur un ou plusieurs micropositionneurs-mesureurs dont l'un au moins est utilisé pour la mesure, le ou les autres permettant de décaler le zéro de l'interféromètre de mesure.

Ce décalage peut être obtenu par l'interposition de lames ou jeux de lames (189) et (179) d'épaisseurs voisines que l'on place devant les miroirs M1 et M2 de l'interféromètre de mesure pour créer une différence de chemin optique fonction de la différence des épaisseurs des lames placées devant le miroir M1 d'une part et M2 d'autre part. Une lame de verre d'épaisseur E, transparente dans le domaine spectral de la source lumineuse, crée une différence chemin optique $D = (n-1)E$, n étant l'indice de réfraction de la lame. Deux lames, ou deux jeux de lames d'épaisseurs respectives Ei et Ej placées respectivement devant les miroirs fixe et mobile créeront une différence de chemin optique D fonction de la différence d'épaisseur E entre ces deux lames ou jeux de lames. Un empilement de deux ou plusieurs micropositionneurs-mesureurs peut également réaliser ce décalage sans pour autant modifier la résolution de mesure.

Selon une autre particularité, on dispose une lame devant l'un des miroirs M1 ou M2 pour décaler le zéro de l'interféromètre de mesure lorsque le décalage nécessaire est important.

Selon une autre particularité, le détecteur (C) comporte plusieurs capteurs interférométriques pour la mesure en plusieurs points d'une ou plusieurs grandeurs physiques.

Selon une autre particularité, le dispositif émetteur (a) est constitué d'une seule source élémentaire émettrice de lumière, alimentée en permanence et éclairant un commutateur (94) placé devant un ensemble de branche de fibres optiques, lequel ensemble est constitué d'autant de fibres (95-1 à 95-n) qu'il y a de capteurs interférométriques (96-1 à 96-n) et en ce que le commutateur (95) est commandé pour présenter sélectivement chacun des spectres cannelés délivré par chaque capteur interférométrique (96) un à un devant une fibre (97) éclairant le collimateur (10) d'entrée de l'interféromètre de mesure (98).

Selon une autre particularité, le dispositif émetteur est constitué d'autant de sources élémentaires (81-1 à 81-n) alimentées successivement de manière cyclique ou programmable pour fournir par un ensemble de voies optiques (82, 83, 84) le flux lumineux à un ensemble de capteurs (85) et par un ensemble de voies optiques (84, 83, 86) de retour le flux lumineux à un concentrateur (87) pour présentation au collimateur (10) d'entrée de l'interféromètre de mesure (88).

Selon une autre particularité, le dispositif émetteur à bande spectrale large est constitué par une source élémentaire ou plusieurs sources élémentaires différentes à spectres larges afin d'élargir la bande spectrale, chaque source ayant un maximum centré sur le minimum d'atténuation de la fibre.

Selon une autre particularité, le dispositif émetteur est constitué par une première diode électroluminescente (71) dont le spectre est centré sur la longueur d'onde de réflexion totale d'une lame dichroïque (73) et par une deuxième diode (72) dont le spectre est centré sur la longueur d'onde de transmission totale de la lame dichroïque.

Selon une autre particularité les branches (86) des fibres optiques de retour sont collées et rassemblées en faisceau circulaire dont la surface perpendiculaire à l'axe des fibres est dressée et polie.

Selon une autre particularité, le concentrateur (87) est constitué d'une fibre, à section décroissante d'angle faible et à section d'entrée (870) supérieure à la section du faisceau des fibres de retour (86), réalisée par étirage d'un barreau de verre par exemple.

Selon une autre particularité, plusieurs interféromètres de mesure (102) sont couplés en étoile à la sortie d'un éclateur (103) et commutables afin d'améliorer la disponibilité du dispositif d'analyse.

Selon une autre particularité, chacun des interféromètres est constitué de pièces optiques ayant un coefficient de réflexion compris entre 0,95 et 0,4.

Dans le dispositif optique interférométrique selon l'invention les fibres optiques utilisées permettront de travailler en lumière blanche, c'est-à-dire avec des spectres à bande large.

Selon une forme de réalisation préférentielle du dispositif optique interférométrique pour la mesure d'une grandeur physique dite principale selon l'invention, le capteur double de détection utilise deux interféromètres dont l'un mesure la grandeur physique principale et l'autre une grandeur d'influence nécessaire à la correction de la grandeur physique principale.

D'autres caractéristiques et avantages de la présente invention apparaîtront plus clairement à la lecture de la description ci-après faite en référence aux dessins annexés dans lesquels :

- la figure 1 représente une vue en coupe d'un capteur interférométrique double homogène parallèle selon l'invention;
- la figure 2 représente une vue en coupe d'un capteur interférométrique double mixte série selon l'invention.
- la figure 3 illustre schématiquement la constitution d'ensemble du dispositif;
- la figure 4 représente une forme de réalisation concrète du concentrateur ;
- la figure 5 représente le signal délivré par le photodétecteur qui est la fonction d'intercorrélation des interféromètres du capteur d'un seul interféromètre et de mesure dans le cas d'une source de lumière à une seule diode électroluminescente aux alentours de $D_c$ ;
- la figure 6 représente le signal délivré par le photodétecteur qui est la fonction d'intercorrélation des interféromètres du capteur et de mesure dans le cas d'une source de lumière à deux diodes électroluminescentes différentes ;
- la figure 7 représente un mode de réalisation d'une source lumineuse à double spectre ;
- la figure 8 représente une variante de dispositif interférométrique multicapteur à source lumineuse commutée ;
- la figure 9 représente une variante de dispositif interférométrique multicapteur à source lumineuse et à analyseur unique ;
- la figure 10 représente un dispositif multi-analyseur.
- la figure 11 représente la fonction d'intercorrélation à partir de $D_M = 0$ dans les mêmes conditions que celles de la figure 5;
- la figure 12 représente la fonction d'intercorrélation dans le cas d'un capteur double $D_{c1}$ et $D_{c2}$ et une diode électroluminescente.

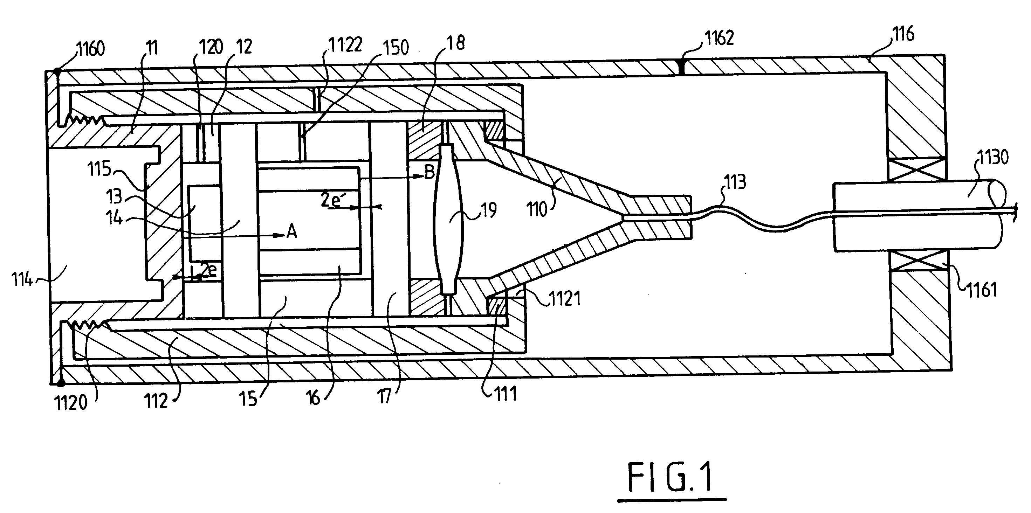

Le capteur interférométrique double dit "capteur homogène parallèle", figure 1, est constitué d'une bague de serrage (112) de forme cylindrique creuse dans laquelle vient se visser à son extrémité (1120) une bague cylindrique (11) formant un trou borgne (114), ce trou borgne est obturé par une face plane constituée par une membrane (115) métallique déformable en fonction de la pression et de la température à laquelle est porté, d'une façon homogène, l'ensemble du capteur. Cette membrane appuie sur son pourtour sur une bague d'entretoise (12) d'épaisseur (E2) et en verre de coefficient de dilatation ($\alpha$1). Sur cette bague cylindrique d'entretoise (12) est adhérée une lame à faces parallèles constituée par un même verre de coefficient de dilatation ($\alpha$1) formant une lame à faces parallèles (14). Sur la face tournée vers la membrane déformable (115), est adhérée une lame à faces parallèles constituée par un même verre de coefficient de dilatation ($\alpha$1),cette lame (13) ayant une épaisseur (E3). Une deuxième lame à faces parallèles (17), constituée par un verre de coefficient de dilatation ($\alpha$2) est placée à une distance (E5) par une entretoise cylindrique (15) constituée par du verre ayant un même coefficient de dilatation ($\alpha$2). Dans l'intérieur du cylindre (15) se trouve un deuxième cylindre (16) également creux et ayant une épaisseur (E6) inférieure à (E5). Le diamètre interne de ce cylindre creux (16) correspond approximativement au diamètre externe de la lame à faces parallèles (13). Ce cylindre (16) constitué dans un premier verre de coefficient de dilatation ($\alpha$1) est adhéré sur la lame (14). Sur la deuxième lame (17) est adhérée une dernière entretoise (18) de montage d'une lentille collimatrice (19). Sur les bords de cette lentille collimatrice (19) repose également la base d'une pièce de révolution (110) dont le somment sert de support pour une fibre de transmission de lumière (113) dont l'extrémité est placée au foyer de la lentille collimatrice. Enfin un ensemble de rondelles élastiques (111) appuyant d'une part sur la face externe de la pièce (110), d'autre part sur l'épaulement délimitant l'ouverture centrale (1121) dans la bague de serrage (112), permet de maintenir les différents éléments adhérés entre eux. Une enveloppe (116) extérieure à la bague de serrage (112) qui assure l'isolement du capteur à l'environnement est fixée de manière étanche sur la bague membrane (11), par exemple par un cordon de soudure (1160) et assure de plus l'étanchéïté, par une bague d'étanchéïté (1161) sur le câble (1130) qui contient la fibre optique (113). De façon à créer le vide à l'origine dans l'ensemble du capteur on prévoit les orifices (120, 150 et 1122)et l'orifice (1162) de l'enveloppe extérieure (116) qui est rebouché une fois le vide créé. A l'extérieur de (116) règnent la pression et la température du puits de production. En fonctionnement le capteur a sa membrane (115) soumise à la pression et à la température du puits de production et sous l'action de ces deux paramètres la membrane se déplace de façon à faire varier la distance e égale à la différence des épaisseurs (E3) et (E2), des lames respectives (13) et (12). Cette distance (e) variant, le faisceau lumineux qui passe dans le premier interféromètre au voisinage de l'axe de symétrie du capteur selon le trajet (A) voit ses cannelures se modifier en fonction du déplacement de la membrane (115). Par contre le faisceau lumineux annulaire passant dans le deuxième interféromètre selon le trajet représenté par la flèche (B) parcourt la distance (e') séparant l'élément (16) de l'élément (17). Cette distance varie en fonction de la température et du fait de la différence des coefficients de dilatation ($\alpha$1) et ($\alpha$2) respectifs de ces éléments. Par conséquent, le faisceau lumineux selon le trajet B aura ses cannelures modifiées en fonction de cette variation. La lumière issue des deux interféromètres est mélangée à l'entrée de la fibre (113) et comporte des cannelures représentatives des distances 2e et 2e' parcourues. La différence de marche 2e du premier interféromètre , à titre d'exemple, est de 300 microns et celle 2e' du second interféromètre de 400 microns. L'exploitation de ces cannelures dûes à 2e et 2e' prenant en compte à la fois les variations de pression et de température sera effectuée par le circuit décrit ultérieurement. Dans la réalisation de la figure 1 les élements (12, 13, 14 et 16) sont adhérés entre eux et les éléments (15, 17) sont également adhérés entre eux. La jonction entre l'élément (15) et l'élément (14) n'est pas collée de façon à permettre aux différentes dilatations de se développer.

Dans une variante de réalisation du capteur, on peut avoir le cylindre (16) adhéré sur la lame (17). Dans cette variante la deuxième lame (17) et le deuxième cylindre (16) auront même coefficient de dilatation ($\alpha$2), tandis que l'entretoise cylindrique (15) aura un coefficient de dilatation ($\alpha$1)

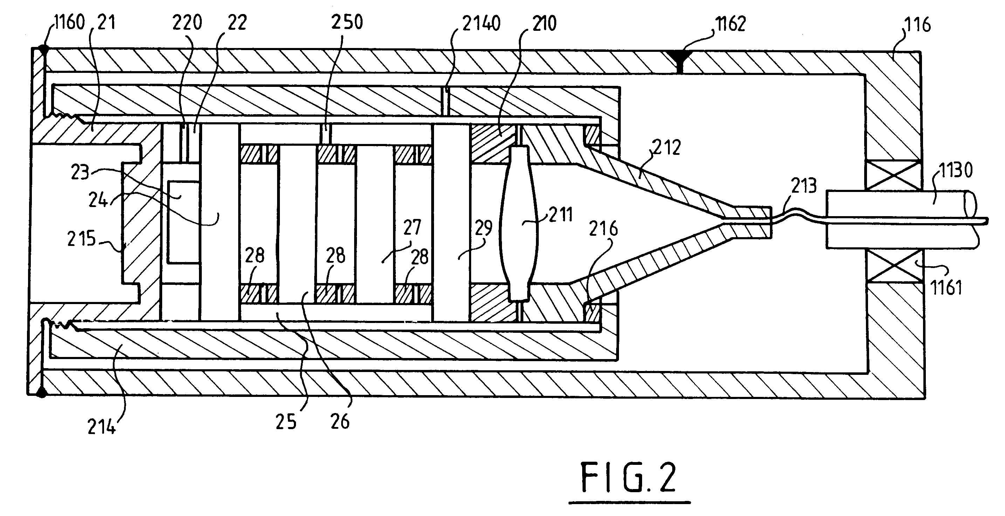

La figure 2 décrit un deuxième type de capteur interférométrique double dit "capteur mixte série" dans lequel on retrouve la bague de serrage (214) et la membrane déformable (21) avec sa face (215). Le premier interféromètre de ce capteur est également constitué par la coopération de la face (215) avec la lame à faces parallèles (23), la lame (24) et l'entretoise (22). Ces éléments se comportent de la même façon que les éléments ayant les références (11, 12, 13, 14). Un deuxième interféromètre constitué par l'empilement d'une entretoise (28), d'un polariseur (27), d'une entretoise (28), d'un cristal biréfringent (26) d'épaisseur (E6), par exemple en niobate de lithium (LiNbO$^3$ ) dont la biréfringence dépend de la température. Ce second interféromètre est générateur d'un spectre cannelé dont les cannelures varient en fonction de la température. Cet empilement est contenu dans l'entretoise cylindrique creuse (25) et fermé aux deux extrémités par les lames à faces parallèles et adhérées (24) et (29). Enfin le capteur se termine par une entretoise (210) de montage supportant une lentille collimatrice (211) et un support (212) de fibre optique, comme dans la réalisation précédente. Le capteur comporte également des rondelles élastiques (216) permettant d'appuyer l'ensemble sur les bords de la membrane déformable (21). L'objet des entretoises élastiques (28) est de compenser les variations d'épaisseur de la somme des pièces (26) et (27) due à la température par rapport aux variations de dilatation de la pièce (25). Comme dans le premier type de capteur, des orifices (220, 250, 2140, 1162) sont aménagés dans les différentes pièces afin de pouvoir créer le vide à l'origine après avoir monté une enveloppe extérieure (116) et assuré l'étanchéité sur le câble (1130) contenant la fibre optique (213). Dans le cas de ce capteur le spectre cannelé, créé par le passage successif du faisceau lumineux collimaté dans le deuxième interféromètre, puis le premier interféromètre, puis après réflexion à nouveau dans le deuxième interféromètre, est focalisé par la lentille collimatrice (211) sur la fibre optique (213). Par conséquent le faisceau lumineux sortant du capteur a un spectre constitué du produit des spectres cannelés générés par chacun des deux interféromètres suite aux variations de pression et température sur la membrane (215) et aux variations de température modifiant la bi-réfringence et l'épaisseur (E6) de la lame (26).

La variante de la figure 1 est constituée de deux interféromètres de Fabry-Perrot en parallèle appelé capteur homogène parallèle.

La variante de la figure 2 est constituée d'un interféromètre de Fabry-Perrot associé en série avec un interféromètre bi-réfringent appelé capteur mixte série.

De façon évidente on peut constituer un capteur homogène série en associant en série deux interféromètres bi-réfringents ou encore un autre capteur homogène parallèle en associant en parallèle deux intérféromètres bi-réfringents.

De même on peut constituer un capteur mixte parallèle en associant en parallèle un interféromètre bi-réfringent et un interféromètre de Fabry-Perrot, l'interféromètre bi-réfringent jouant le rôle de premier interféromètre sensible à la pression ou de second interféromètre sensible à la température.

Les capteurs ci-dessus peuvent être utilisés dans tout dispositif de mesure interférométrique et en particulier avec le dispositif décrit ci-après.

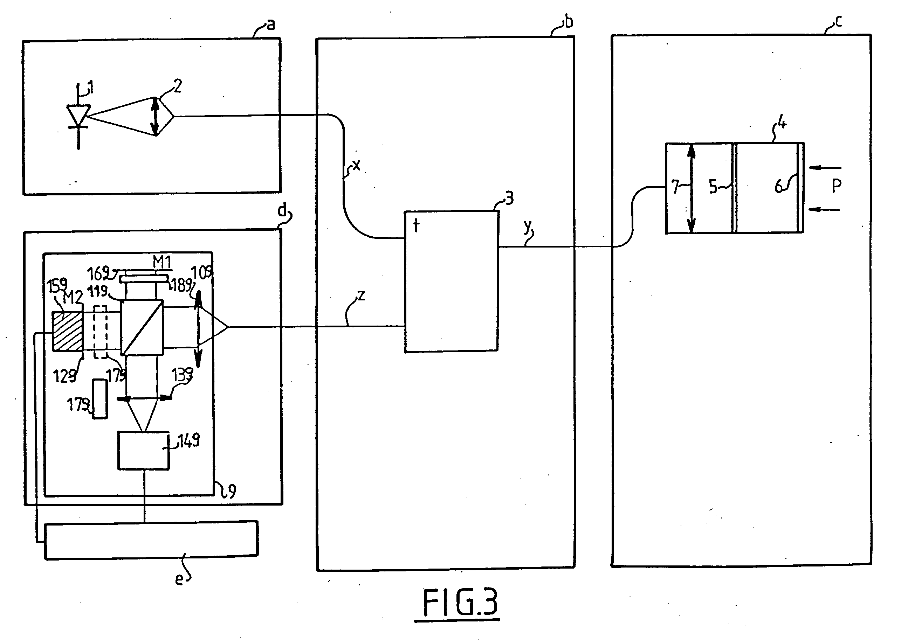

L'ensemble du dispositif est constitué d'un dispositif émetteur de lumière (a), d'un système de transmission du flux lumineux (b), d'un ensemble détecteur (c) composé d'un capteur double, d'un système de mesure (d) et d'un système de traitement (e), figure 3.

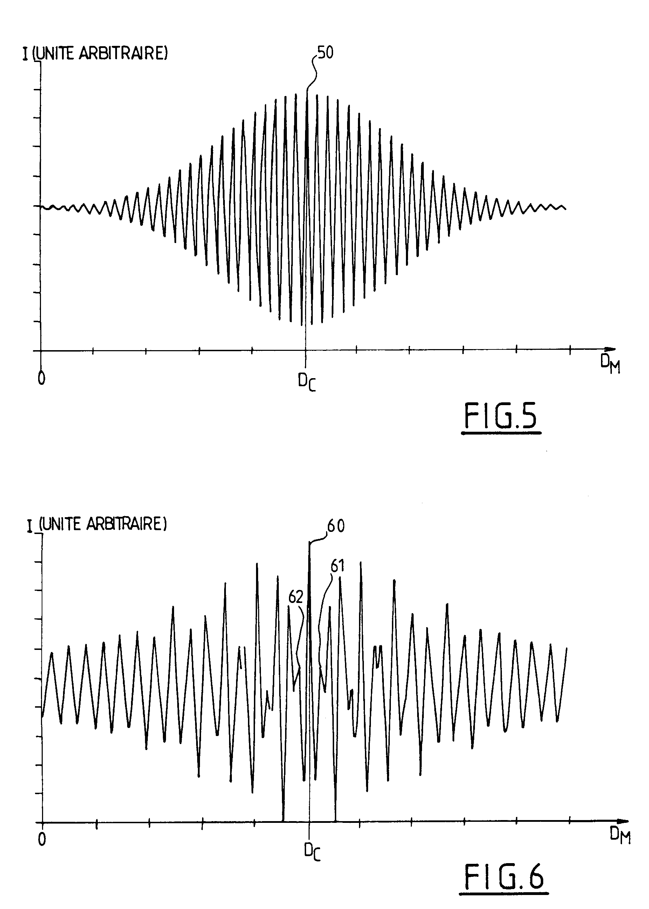

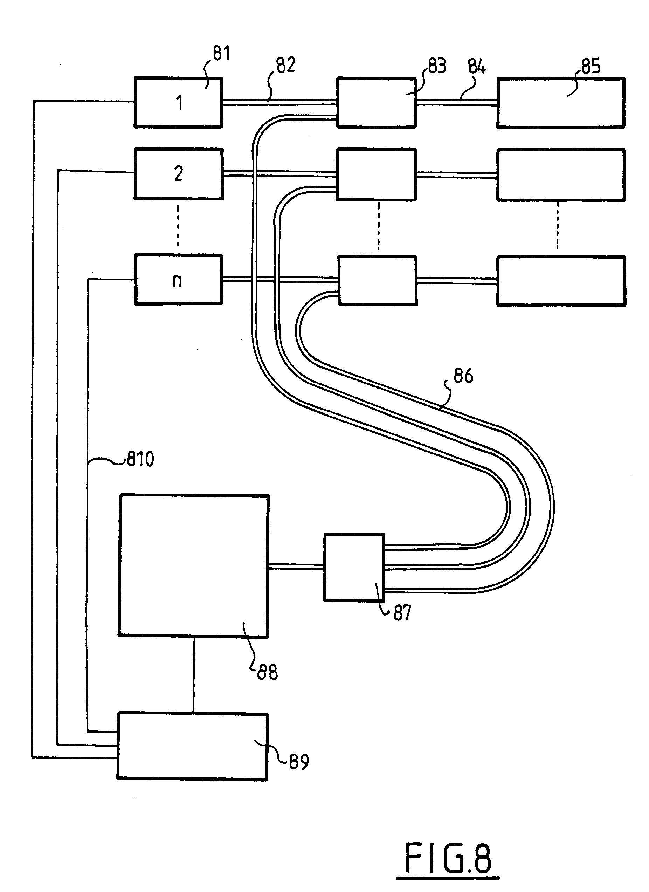

Le dispositif émetteur (a) est constitué, comme représenté figure 3, d'une source, par exemple une diode électroluminescente (1), dont on focalise le flux lumineux sur l'entrée d'une fibre optique (x) d'un système de transmission (b), à l'aide d'un condenseur (2). De préférence, on peut utiliser, dans certaines variantes, deux diodes ou une pluralité de diodes à bande large, le maximum de chacun de ces spectres coïncidant avec chaque minimum d'atténuation de transmission d'une fibre optique dont les valeurs sont respectivement environ, 800, 1300 et 1500 nanomètres afin d'augmenter la longueur de déport. La source la plus avantageuse est représentée à la figure 7 et comporte un premier spectre centré sur 800 nanomètres et un deuxième centré sur 1300 nanomètres. La source à large bande est constituée d'une première diode électroluminescente (71) émettant dans le premier spectre, d'une deuxième diode électroluminescente (72) émettant dans le deuxième spectre et d'une lame dichroïque (73) à front raide centré à mi-distance (vers 1050 nanomètres) des maxima d'émission des deux diodes. Cette lame dichroïque (73) transmet la totalité du spectre de la diode (72) dont le spectre est centré à 1300 nanomètres et réfléchit la totalité du spectre de celle (71) dont le spectre est centré à 800 nanomètres. Cette idée de combiner au moins deux diodes électroluminescentes dont les maxima sont centrés sur les minima d'atténuation de la fibre permet, comme représenté figure 6, d'augmenter considérablement la différence entre deux maxima de la fonction d'intercorrélation, le maximum principal (60) et les maxima voisins (61) et (62) au voisinage du maximum (60) et permet d'avoir une bien meilleure marge de détection vis-à-vis du bruit de mesure; de plus la disponibilité est meilleure avec deux diodes qu'avec une seule.

Le système de transmission du flux lumineux (b) est constitué par un sous-ensemble comprenant 3 fibres optiques (x, y, z) et un coupleur (t). Le coupleur assure le transfert du flux lumineux de l'aller, issu de la source de x vers y ainsi que celui du flux lumineux issu du capteur double vers z. La longueur de chacune des fibres peut être quelconque.

L'ensemble (c) comporte un capteur double (4), de l'un des deux types décrits précédemment, éclairé par y. Il est constitué d'une lentille collimatrice (7) et de deux interféromètres en "série" ou "parallèles" (5) et (6). L'interféromètre (5) est sensible à la température et l'autre interféromètre (6) est sensible à la pression et à la température (lame semi-réfléchissante et membrane (13, 115 fig 1 ou 23, 215 fig 2).

La lentille collimatrice (7) reçoit la lumière issue de la fibre optique y et l'envoie vers les interféromètres. Par retour inverse elle focalise le flux lumineux issu des interféromètres à l'entrée de la fibre y.

Ce flux lumineux a un spectre cannelé composite qui est la somme pour le capteur parallèle, ou le produit pour le capteur série, des spectres cannelés dus à chacun des interféromètres sensibles à la température et à la pression et température.

Le flux lumineux transporté par la fibre (z) pénètre dans l'ensemble (d) interféromètre d'analyse, passe par une lentille de collimation (109) et par un système séparateur (119), qui le divise en deux sous-faisceaux dont l'un est réléchi par un miroir M1 (169) de référence, tandis que l'autre est réfléchi par un miroir mobile M2 (129) lié à un micropositonneur-mesureur (159) piézoélectrique, auquel on fait subir le déplacement à mesurer.

Les flux lumineux réfléchis par chacun des deux miroirs M1 et M2 vont interférer au niveau du système séparateur (119). Le flux lumineux traverse un condenseur (139) et éclaire un détecteur photoélectrique (149). Le micropositionneur-mesureur (159) ainsi que le détecteur photoélectrique (149) sont reliés à un dispositif de traitement et de commande (e).

Les positions relatives des deux miroirs M1 et M2 vont définir une différence de trajet optique de mesure $D_M$ que l'on va pouvoir modifier en déplaçant à l'aide du micropositioneur-mesureur (159) par un système de commande électronique le miroir mobile M2. Le flux lumineux arrivant sur le détecteur photoélectrique passe par une série de maxima, représentés figure 5, de plus en plus grand au fur et à mesure qu'on se rapproche du "maximum principal" (50).Ce maximum principal (50) témoigne de l'égalité des deux différences des trajets optiques $D_c$ et $D_M$ dans chacun des interféromètres capteur (4) d'une part et de mesure (119, 129, 169) d'autre part. Un second maximum apparait dans la fonction d'intercorrélation pour $D_M = 0$, figure 11.

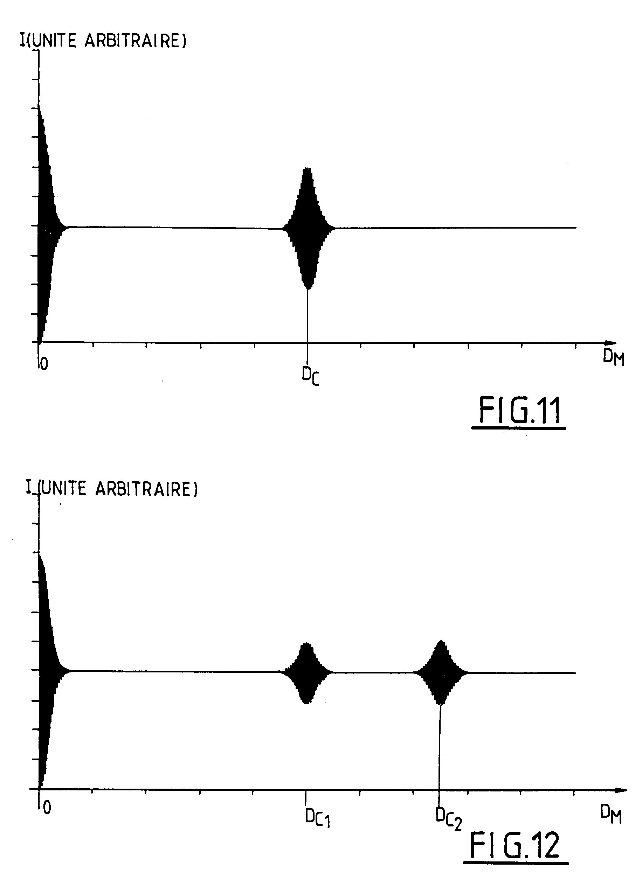

Eclairé directement par la source, l'interféromètre de mesure transmettrait un flux lumineux dont le spectre cannelé serait caractéristique de la différence de chemin optique $D_M$ de l'interféromètre de mesure. Eclairé par un flux lumineux présentant un spectre cannelé associé à une différence de chemin optique $D_c$,l'interféromètre de mesure transmettra en sortie un flux dont l'intensité traduira le niveau de corrélation entre les spectres cannelés associés aux différences de chemin optique $D_M$ et $D_c$. Or le capteur interférométrique double (4) présente un spectre cannelé composite qui est la somme de deux spectres cannelés dus aux deux interféromètres (5) et (6) dans le cas d'un capteur "parallèle" ou le produit des spectres cannelés dus aux deux interféromètres (5) et (6) dans le cas d'un capteur "série". L'intensité du flux de sortie recueilli sur le photodétecteur présente donc trois maxima principaux, dont l'un correspond à une différence de marche nulle de l'interféromètre de mesure traduisant le fait qu'il n'y a pas d'interférences destructives et que toute l'énergie qui rentre dans l'interféromètre ressort, et les autres correspondent à des différences de marche sur l'interféromètre de mesure égales en valeur absolue à celle du capteur double: $D_M = D_{c(1)}$ ou $D_{c(2)}$, figure 12. $D_{c(1)}$ correspond à la différence de marche du premier interféromètre (5), figure 3 et $D_{c(2)}$ à celle du second interféromètre (6), figure 3. Ces deux différences de trajet permettent, par le calcul, de connaitre la pression vraie et la température, par exemple dans le puits de production.

Pour permettre la mesure dans le cas où les différences de marche $D_{c1}$ et $D_{c2}$ sont trop éloignées l'une de l'autre on dispose, pour décaler le zéro de l'interféromètre de mesure d'une valeur faible connue, d'un jeu de lames à faible différence connue de chemins optiques que l'on peut disposer devant les miroirs M1 ou M2 de l'interféromètre de mesure. Dans le cas d'un décalage important une seule lame (179, fig 3) est disposée devant le miroir M1, ou une seule lame (189) est disposée devant le miroir M2.

La figure 6 représente la fonction d'intercorrélation entre l'un des interféromètres du capteur et l'interféromètre de mesure lorsque la lumière émise par la source est constituée par la somme des spectres de deux diodes électroluminescentes dont les spectres sont respectivement centrés sur 800 et 1300 nanomètres avec une largeur de spectre d'environ 100 nanomètres. Avec cette configuration, le maximum (60) sera plus facilement déterminé puisque le contraste entre le pic principal (60) et les pics latéraux (61) et (62) sera plus net.

L'utilisation d'un système de détection en série dans un même capteur sur une même fibre, avec une analyse du signal utilisant un système de mesure absolue du déplacement, combiné avec l'utilisation d'un jeu de lame à faces parallèles pour ramener les différences de marche dans la plage de déplacement du système de mesure, avec l'élargissement du spectre de la source en utilisant plusieurs fenêtres de transmission des fibres optiques afin d'améliorer la détection et la protection vis-à-vis des bruits de mesure, permet d'obtenir dans une gamme de pression de 200 bars et de température de 150 degré C, en un point de mesure à environ 3km ,dans un puits de production d'hydrocarbures, une précision de mesure de 0,1%.

Afin d'optimiser à la fois le niveau et le contraste du signal délivré par le photodétecteur, on choisira des coefficients de réflexion des lames à faces parallèles des interféromètres du capteur double compris entre 0,4 et 0,95. De façon avantageuse, le coefficient de réflexion sera compris entre 0,4 et 0,7.

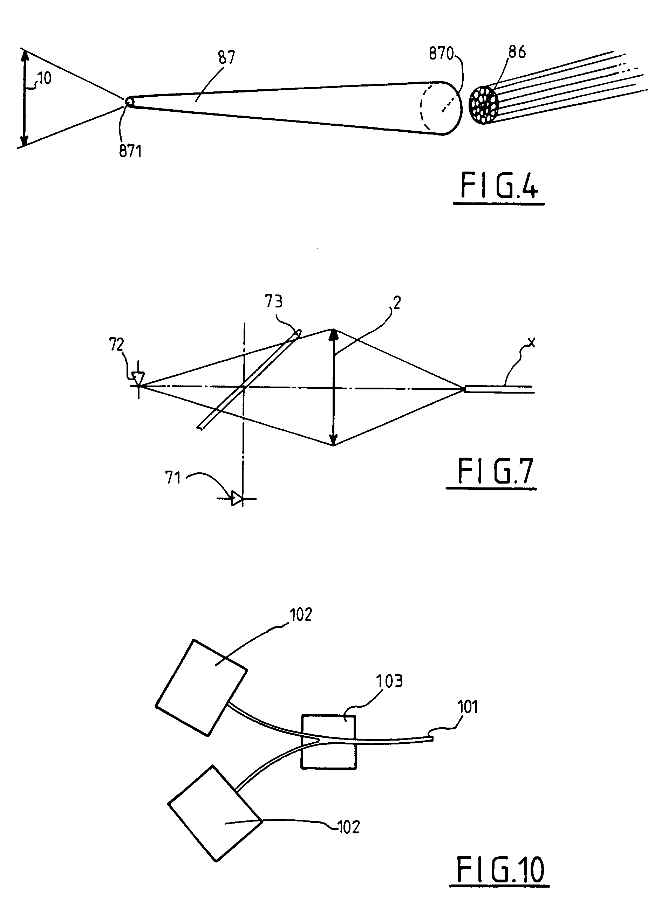

Selon une autre forme de réalisation voisine de la précédente, représentée à la figure 8, le dispositif optique interférométrique pour la mesure de grandeurs physiques multiples est constitué par un dispositif émetteur dont la source d'émission peut être constituée d'une pluralité de sources (81-1 à 81-n) alimentées sélectivement par un dispositif de traitement et de commutation (89) pour éclairer une à une les branches (82-1 à 82-n) de l'ensemble de transmission optique. Le dispositif optique comprend également un ensemble de coupleurs (83-1 à 83-n) constituant avec les fibres optiques (82, 84, 86) n systèmes de transmission identiques à celui (b) décrit dans la réalisation préférentielle, un ensemble de "n" détecteurs composé de capteurs (85) destinés chacun à effectuer des mesures, un système de mesure (88) et un système (89) de traitement et de commutation des sources de lumières relié par n liaisons (810) aux sources (81). Il n'y a pas dans cette réalisation de moyen d'adressage et les flux réfléchis par chacun des capteurs de mesure sont combinés avant l'entrée de l'interféromètre de mesure grâce à un concentrateur (87) schématisé sur la figure 4.

Les extrémités des n fibres (86-1 à 86-n) à la sortie du système de fibres optiques sont rassemblées en un faisceau circulaire d'un diamètre tel qu'il contient effectivement ces fibres. Ces fibres sont ensuite collées et la surface perpendiculaire à leurs axes est dressée, polie et accollée à un concentrateur (87). Le concentrateur (87) a une face d'entrée (870) dont le diamètre est supérieur au diamètre du faisceau des n fibres (86-1 à 86-n). Le concentrateur (87) est réalisé par étirage d'un barreau de verre ou plastique pour obtenir une fibre à section décroissante et d'angle faible. Si l'angle n'est pas trop grand, on peut obtenir à l'extrémité (871) ayant le plus petit diamètre un flux lumineux homogène dont le rendement par rapport au flux d'entrée suit les lois de l'optique (figure 4). L'utilisation de plastique permet de minimiser les pertes par rapport à ce qu'elles seraient avec une fibre décroissante en verre, puisque l'ouverture numérique de sortie donc l'angle d'acceptance à l'entrée de la fiche décroissante, est plus grand pour une fibre en plastique qu'en verre.

Ce flux est séquentiellement le flux émis par chacune des sources.

Un système de traitement (89) lié au photodétecteur de l'interféromètre de mesure (88) identique à l'ensemble référencé (9) sur la figure 3 permet d'obtenir, à partir des mesures de variation de chemins optiques $D_{c1}$ et $D_{c2}$ correspondant au maximum de corrélation, les grandeurs physiques mesurées dans chacun des capteurs.

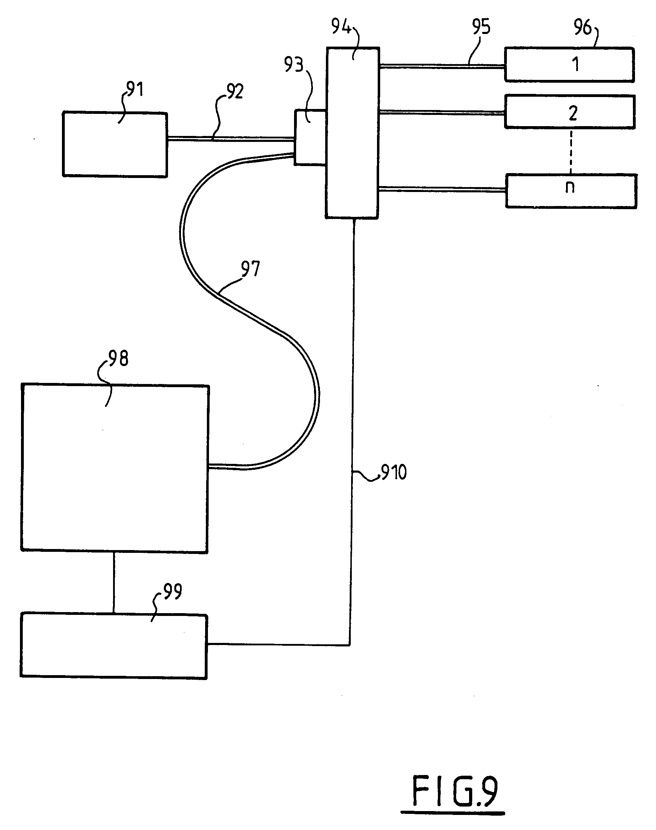

Une autre variante, représentée à la figure 9, est constituée d'un système d'instrumentation multi-capteur (96) relié à un seul interféromètre d'analyse (98) par un dispositif de commutation des voies de mesure provenant des capteurs. Le système est alimenté par une source lumineuse (91) reliée par une fibre optique (92) à un coupleur (93) accollé à un commutateur (94) de voies optiques commandé par une liaison (910) provenant du circuit de traitement et de commande (99). Chacune des voies (95-1 à 95-n) constituée par une fibre optique est reliée à un capteur respectif (96-1 à 96-n). Le coupleur (93) transmet la voie commutée à la fibre (97) reliée au système (98) d'analyse et de mesure identique à celui référencé (9) sur la figure 3. Dans les deux exemples de réalisation décrits ci-dessus, les n spectres cannelés composites issus chacun de l'un des capteurs doubles éclairés sélectivement sont séquentiellement analysés l'un après l'autre par le système de traitement (89) ou (99).

Une dernière variante peut consister, comme représenté à la figure 10, à coupler plusieurs dispositifs de mesure (102) du type décrit précédemment en étoile à la sortie d'un éclateur (103), chacun des dispositifs de mesure (102) étant commutable afin d'améliorer la disponibilité de l'ensemble.

Naturellement, l'invention n'est en rien limitée par les particularités qui ont été spécifiées dans ce qui précède ou par les détails des modes de réalisation particuliers choisis pour illustrer l'invention. Toutes sortes de variantes peuvent être apportées aux réalisations particulières qui ont été décrites à titre d'exemples et à leurs éléments constitutifs sans sortir pour autant du cadre de l'invention. Cette dernière englobe tous les moyens constituant des équivalents techniques des moyens décrits ainsi que leurs combinaisons. En particulier dans les exemples de système d'analyse représentés figure 8 à 10, les capteurs interférométriques utilisés peuvent être doubles ou simples selon le degré de précision souhaité pour la grandeur physique mesurée.

**Revendications**

1. Capteur interférométrique caractérisé en ce qu'il comprend deux interféromètres dans une enveloppe étanche (116) sous vide, le premier interféromètre formant une des faces de l'enveloppe et permettant la fourniture d'un signal représentatif de deux paramètres physiques, le deuxième interféromètre disposé dans l'enveloppe étanche permettant la fourniture d'un signal représentatif d'un seul des dits paramètres physiques.

2. Capteur interférométrique selon la revendication 1, caractérisé en ce qu'il est parallèle, homogène et de type Fabry Perrot et que lesdits deux interféromètres sont en parallèle et utilisent des faisceaux de lumière concentriques (A) central et (B) extérieur issus d'une fibre optique placée au foyer d'une lentille collimatrice (19), le premier interféromètre utilisant un faisceau central (A) comporte une membrane déformable (115) dont la déformation est sensible à la pression et à la température qui font varier sa position par rapport à l'une des faces d'une première lame (13) de verre à faces parallèles en fonction de la pression et de la température, le deuxième interféromètre sur le trajet du faisceau extérieur (B) étant constitué d'un interféromètre dans lequel la distance entre deux faces de deux lames de verre à faces parallèles (16, 17) maintenues par une entretoise cylindrique (15) varie en fonction des coefficients de dilatation différents de chacune de ces deux lames (16, 17), la lentille collimatrice (19) focalisant lesdits deux faisceaux de lumière en direction d'une fibre optique (113), ces deux faisceaux optiques ayant deux différences de marche différentes créant chacun un spectre cannelé de la source, chaque spectre se recombinant en s'additionnant vers la fibre optique (113).

3. Capteur interférométrique selon la revendication 1, caractérisé en ce qu'il est mixte, parallèle du type bifringent, Fabry Perrot et que lesdits deux interféromètres sont en parallèle et utilisent des faisceaux de lumière concentrique, central (A) et extérieur (B) issus d'une fibre optique placée au foyer d'une lentille collimatrice (19), le premier interféromètre utilisant un faisceau central (A) comporte une membrane déformable (115) dont la déformation est sensible à la pression et à la température qui font varier sa position par rapport à l'une des faces d'une première lame de verre à faces parallèles en fonction de la pression et de la température, le deuxième interféromètre sur le trajet du faisceau extérieur (B) est constitué par un polariseur et une lame bi-réfringente dont la bi-réfringence varie en fonction de la température pour créer un spectre cannelé qui est focalisé sur la fibre optique par la lentille collimatrice (19) pour se recombiner en s'additionnant avec le spectre cannelé du faisceau central.

4. Capteur interférométrique selon la revendication 1, caractérisé en ce qu'il est mixte, parallèle, du type Fabry Perrot, biréfringent et que lesdits deux interféromètres en parallèle et utilisent des faisceaux de lumière concentrique central (A) et extérieur (B) issus d'une fibre optique placée au foyer d'une lentille collimatrice (19), le premier interféromètre utilisant le faisceau central (A) comporte un polariseur et une lame bi-réfringente dont la bi-réfringence varie principalement en fonction de la pression, le deuxième interféromètre sur le trajet du faisceau extérieur (B) est constitué d'un interféromètre dans lequel la distance entre deux faces de deux lames de verre à faces parallèles maintenues par une entretoise cylindrique varie en fonction des coefficients de dilatation différents de chacune de ces deux lames.

5. Capteur interférométrique selon la revendication 1, caractérisé en ce qu'il est homogène parallèle du type biréfringent et que lesdits deux interféromètres sont en parallèle et utilisent des faisceaux de lumière concentrique central (A) et extérieur (B) issus d'une fibre optique placée au foyer d'une lentille collimatrice, le premier interféromètre utilisant le faisceau central (A) comporte un polariseur et une lame bi-réfringente dont la bi-réfringence varie principalement en fonction de la pression, le deuxième interféromètre sur le trajet du faisceau extérieur (B) est constitué d'un second polariseur et d'une seconde lame bi-réfringente dont la bi-réfringence varie en fonction de la température pour créer un spectre cannelé qui est focalisé sur la fibre optique par la lentille collimatrice pour se recombiner en s'additionnant avec le spectre cannelé du faisceau central.

6. Capteur interférométrique selon la revendication 1, caractérisé en ce qu'il est homogène série du type biréfringent et que lesdits deux interféromètres sont en série et utilisent un seul faisceau lumineux issu d'une fibre optique placée au foyer d'une lentille collimatrice (211), le premier interféromètre étant constitué d'une membrane déformable (215) dont la déformation est sensible à la pression et à la température qui font varier sa position par rapport à l'une des faces d'une première lame (23) de verre à faces parallèles en fonction de la pression et de la température de façon à obtenir une différence de chemin optique caractéristique de la position de la membrane et créant un spectre cannelé de la source, le second interféromètre sur le trajet lumineux est constitué par un polariseur (27) et une lame bi-réfringente (26) dont la bi-réfringence varie en fonction de la température pour créer, après avoir été traversé deux fois à l'aller et au retour, par différence de marche un spectre cannelé, le spectre

cannelé résultant, étant le produit des spectres cannelés de chacun des interféromètres, est focalisé sur la fibre optique (213) par la lentille collimatrice (211).

7. Capteur interférométrique selon la revendication 1, caractérisé en ce qu'il est mixte série du type Fabry Perrot biréfringent et que lesdits deux interféromètres sont en série et utilisent un seul faisceau lumineux issu d'un filtre optique placé au foyer d'une lentille collimatrice, le premier interféromètre étant constitué d'une membrane déformable dont la déformation est sensible à la pression et à la température qui font varier sa position par rapport à une des faces d'une première lame de verre à faces parallèles en fonction de ces deux paramètres, de façon à obtenir une différence de chemin optique caractéristique de la membrane et créant un spectre cannelé de la source, le second interféromètre dans lequel la distance entre deux faces de deux lames de verre à faces parallèles varie en fonction des coefficients de dilatation différents de chacune de ces deux lames utilise le faisceau sortant du premier, le spectre cannelé résultant étant focalisé sur la fibre optique par la lentille collimatrice.

8. Capteur interféromètrique selon la revendication 1, caractérisé en ce qu'il est mixte série du type biréfringent Fabry Perrot et que lesdits deux interféromètres sont en série et utilisent un seul faisceau lumineux issu d'une fibre optique placée au foyer d'une lentille collimatrice, le premier interféromètre étant constitué par un polariseur et une lame bi-réfringente dont la bi-réfringence varie principalement en fonction de la pression, le second interféromètre sur le trajet lumineux est constitué d'un interféromètre dans lequel la distance entre deux faces de deux lames de verre à faces parallèles maintenues par une entretoise cylindrique varie en fonction des coefficients de dilatation différents de chacune de ces deux lames.

9. Capteur interféromètrique selon la revendication 1, caractérisé en ce qu'il est série homogène du type bi-réfringent et que les deux interféromètres sont en série et utilisent un seul faisceau lumineux issu d'une fibre optique placée au foyer d'une lentille collimatrice, le premier interféromètre étant constitué par un polariseur et une lame bi-réfringente dont la bi-réfringence varie principalement en fonction de la pression, le second interféromètre sur le trajet lumineux est constitué d'un second polariseur et d'une seconde lame bi-réfringente dont la bi-réfringence varie en fonction de la température pour créer un spectre cannelé résultant qui est focalisé sur la fibre optique par la lentille collimatrice

10. Dispositif optique interferométrique pour la mesure de grandeurs physiques multiples susceptibles de créer des variations de différence de chemins optiques, ledit dispositif étant de type comportant :
   - un dispositif émetteur (a) comprenant au moins une source à bande spectrale large;
   - un détecteur (c) constitué par au moins un capteur interférométrique mixte ou homogène à deux interféromètres (5,6) en série ou en parallèle selon une des revendications 2 à 9 créant un spectre cannelé composite des différences de marches $D_{c1}$, $D_{c2}$ dues à chacun des interféromètres;
   - un ensemble (b) de fibres optiques pour véhiculer le flux lumineux du dispositif émetteur (a) à l'ensemble détecteur (c) et le flux lumineux réfléchi par l'ensemble détecteur;
   - un dispositif d'analyse (d) pour analyser les informations portées par le flux lumineux issu de l'ensemble détecteur et élaborer une valeur représentative des grandeurs physiques mesurées, lequel dispositif d'analyse comprend :
   - un interféromètre de mesure à deux ondes comprenant un collimateur d'entrée (109) éclairé par l'extrémité (z) de la fibre optique, un miroir de référence M1 (169) sur lequel se réfléchit une partie du flux lumineux collimaté fourni par le capteur à deux interféromètres et un second miroir M2 (129) sur lequel se réfléchit l'autre partie dudit flux lumineux collimaté, et des moyens pour faire interférer les deux flux réfléchis sur les miroirs M1 et M2 et donner à la sortie un flux lumineux résultant;
   - un détecteur photoélectrique (149) apte à mesurer l'intensité du flux lumineux issu de l'interféromètre de mesure et de fournir un signal représentatif de ladite intensité; et
   - un ensemble de traitement (e) du signal issu du détecteur photoélectrique fournissant une valeur représentative des grandeurs physiques, caractérisé en ce que le miroir M2 de l'interféromètre de mesure est fixé sur un micropositionneur-mesureur piézoélectrique (159) pour déplacer finement le miroir M2 et mesurer précisément le déplacement correspondant, et en ce que l'ensemble de traitement est relié non seulement au détecteur photoélectrique mais également au micropositionneur-mesureur pour piloter et déterminer la position absolue du miroir M2 correspondant au maximum d'intensité lumineuse reçue sur le détecteur photoélectrique et en déduire les valeurs des différences de marches Dc1, Dc2 nécessaires à l'élaboration de la ou des grandeurs physiques recherchées;

11. Dispositif selon la revendication 10, caractérisé en ce que le miroir M2 (129) de l'interféromètre de mesure est monté sur un ou plusieurs micropositionneurs-mesureurs dont l'un au moins est utilisé pour la mesure, le ou les autres permettant de décaler le zéro de l'interféromètre de mesure.

12. Dispositif selon la revendication 10, caractérisé en ce que l'on dispose de lames ou jeux de lames (189) et (179) d'épaisseurs voisines que l'on place devant les miroirs M1 et M2 de l'interféromètre de mesure pour créer une différence de chemin optique fonction de la différence des épaisseurs des lames placées devant le miroir M1 d'une part et M2 d'autre part.

13. Dispositif selon la revendication 10, caractérisé en ce que l'on dispose une lame (189) ou (179) devant l'un des miroirs M1 ou M2 pour décaler le zéro de l'interféromètre de mesure lorsque le décalage nécessaire est important.

14. Dispositif selon l'une des revendications 10 à 13, caractérisé en ce que le détecteur (C) comporte plusieurs capteurs interférométriques pour la mesure en plusieurs points d'une ou plusieurs grandeurs physiques.

15. Dispositif selon l'une des revendications 10 à 14 caractérisé en ce que le dispositif émetteur (a) est constitué d'une seule source (91) élémentaire émettrice de lumière, alimentée en permanence et éclairant un commutateur (94) placé devant un ensemble de branche de fibres optiques, lequel ensemble est constitué d'autant de fibres (95-1 à 95-n) qu'il y a de capteurs interférométriques (96-1 à 96-n) et en ce que le commutateur (95) est commandé pour présenter sélectivement chacun des spectres cannelés délivré par chaque capteur interférométrique (96) un à un devant une fibre (97) éclairant le collimateur (10) d'entrée de l'interféromètre de mesure (98).

16. Dispositif selon les revendications 10 à 14 caractérisé en ce que le dispositif émetteur est constitué d'autant de sources élémentaires (81-1 à 81-n) alimentées successivement de manière cyclique ou programmable pour fournir par un ensemble de voies optiques (82, 83, 84) le flux lumineux à un ensemble de capteurs (85) et par un ensemble de voies optiques (84, 83, 86) de retour le flux lumineux à un concentrateur (87) pour présentation au collimateur (10) d'entrée de l'interféromètre de mesure (88).

17. Dispositif selon les revendications 10 à 14 caractérisé en ce que le dispositif émetteur à bande spectrale large est constitué par une source élémentaire ou plusieurs sources élémentaires différentes à spectres larges afin d'élargir la bande spectrale, chaque source ayant un maximum centré sur le minimum d'atténuation de la fibre.

18. Dispositif selon la revendication 17, caractérisé en ce que le dispositif émetteur est constitué par une première diode électroluminescente (71) dont le spectre est centré sur la longueur d'onde de réflexion totale d'une lame dichroïque (73) et par une deuxième diode (72) dont le spectre est centré sur la longueur d'onde de transmission totale de la lame dichroïque.

19. Dispositif selon la revendication 16, caractérisé en ce que les branches (86) des fibres optiques de retour sont collées et rassemblées en faisceau circulaire dont la surface perpendiculaire à l'axe des fibres est dressée et polie.

20. Dispositif selon la revendication 16, caractérisé en ce que le concentrateur (87) est constitué d'une fibre, à section décroissante d'angle faible et à section d'entrée (870) supérieure à la section du faisceau des fibres de retour (86), réalisée par étirage d'un barreau de verre par exemple.

21. Dispositif selon une des revendications 15, 16, 17 ou 19, caractérisé en ce que plusieurs interféromètres de mesure (102) sont couplés en étoile à la sortie d'un éclateur (103) et commutables afin d'améliorer la disponibilité du dispositif d'analyse.

22. Application du dispositif selon la revendication 10 à la mesure de deux grandeurs physiques différentes effectuées au même point de mesure, dont au moins une sert à corriger la grandeur physique fondamentale.

23. Capteur interférométrique selon une des revendications 1 à 9, caractérisé en ce que chacun des interféromètres est constitué de pièces optiques ayant un coefficient de réflexion compris entre 0,95 et 0,4.

## Claims

1. Interferometric sensor, wherein it includes two interferometers in a sealed casing (116) under vacuum, the first interferometer forming one of the faces of the casing and enabling a signal to be supplied representative of two physical parameters, the second interferometer disposed in the sealed casing enabling a signal to be supplied representative of only one of said physical parameters.

2. Interferometric sensor according to claim 1, wherein it is parallel, homogeneous and of the Fabry Perrot type and wherein said two interferometers are in parallel and use central concentric light beams (A) and external concentric light beams (B) originating from an optical fiber placed at the focal point of a collimator lens (19), the first interferometer using a central beam (A) comprising a deformable membrane (115) whose deformation is sensitive to pressure and temperature which cause its position to vary with respect to one of the faces of a first glass plate (13) with parallel faces according to the pressure and temperature, the second interferometer on the path of the external beam (B) being formed of one interferometer in which the distance between two faces of two glass plates with parallel faces (16, 17) supported by a cylindrical brace (15) varies according to the different coefficients of expansion of each of these two plates (16, 17), the collimator lens (19) focussing said two light beams in the direction of an optical fiber (113), these two optical beams having two different working differences, each creating a ribbed spectrum of the source, each spectrum recombining by being added to the optical fiber (113).

3. Interferometric sensor according to claim 1, wherein it is mixed and parallel of the Fabry Perrot bi-refractive type and wherein said two interferometers are in parallel and use central (A) and external (B) concentric light beams originating from an optical fiber placed at the focal point of a collimator lens (19), the first interferometer using a central beam (A) comprising a deformable membrane (11() whose deformation is sensitive to pressure and temperature which cause its position to vary with respect to one of the faces of a first glass plate with parallel faces according to the pressure and temperature, the second interferometer on the path of the external beam (B) being constituted by one polarizer and one bi-refractive plate whose bi-refractive power varies according to the temperature so as to create a ribbed spectrum which is focussed on the optical fiber by the collimator lens (19) so as to recombine by being added with the ribbed spectrum of the central beam.

4. Interferometric sensor according to claim 1, wherein it is mixed, parallel and of the bi-refractive Fabry Perrot type and wherein said two interferometers are in parallel and use central (A) and external (B) concentric light beams derived from an optical fiber placed at the focal point of a collimator lens (19), the first interferometer using the central beam (A) comprising one polarizer and one bi-refractive plate whose bi-refractive power mainly varies according to the pressure, the second interferometer on the path of the external beam (B) being constituted by one interferometer in which the distance between two faces of two glass plates with parallel faces supported by a cylindrical brace varies according to the different coefficients of expansion of each of these two plates.

5. Interferometric sensor according to claim 1, wherein it is homogeneous, parallel and of the bi-refractive type and wherein said two interferometers are in parallel and use central (A) and external (B) concentric light beams originating from an optical fiber placed at the focal point of a collimator lens, the first interferometer using the central beam (A) comprising one polarizer and one bi-refractive plate whose bi-refractive power mainly varies according to the pressure, the second interferometer on the path of the external beam (B) being formed of one polarizer and one second bi-refractive plate whose bi-refractive power varies according to the temperature so as to create a ribbed spectrum which is focussed on the optical fiber by the collimator lens so as to recombine by being added with the ribbed spectrum of the central beam.

6. Interferometric sensor according to claim 1, wherein it homogeneous, serial and of the bi-refractive type and wherein said two interferometers are in series and use a single luminous beam originating from an optical fiber placed at the focal point of a collimator lens (211), the first interferometer being formed of one deformable membrane (215) whose deformation is sensitive to pressure and temperature which cause it to vary its position with respect to one of the faces of one first glass plate (23) with parallel faces according to the pressure and temperature so as to obtain an optical path difference characteristic of the position of the membrane and creating a ribbed spectrum of the source, the second interferometer on the luminous path being constituted by one polarizer (27) and one bi-refractive plate (26) whose bi-refractive power varies according to the temperature so as to create a ribbed spectrum after having been traversed twice backwards and forwards and via a working difference, the resultant ribbed spectrum being the product of the ribbed spectrums of each of the interferometers then being focussed on the optical fiber (213) by the collimator lens (211).

7. Interferometric sensor according to claim 1, wherein it is serial mixed and of the bi-refractive Fabry Perrot type and wherein said two interferometers are in series and use a single luminous beam originating from an optical fiber placed at the focal point of a collimator lens, the first interferometer being formed of one deformable membrane whose deformation is sensitive to pressure and temperature which cause its position to vary with respect to one of the faces of a first glass plate with parallel faces according to these two parameters so as to obtain an optical path difference characteristic of the membrane and creating a ribbed spectrum of the source, the second interferometer, in which the distance between two faces of two glass plates with parallel faces varies according to the different coefficients of expansion of each of these two plates, uses the beam coming out of the first one, the resultant ribbed spectrum being focussed on the optical fiber by the collimator lens.

8. Interferometric sensor according to claim 1, wherein its is serial mixed and of the Fabry Perrot bi-refractive type and wherein said two interferometers are in series and use one single luminous beam originating from an optical fiber placed at the focal point of a collimator lens, the first interferometer being constituted by one polarizer and one bi-refractive plate whose bi-refractive power mainly varies according to the pressure, the second interferometer on the luminous path being formed of one interferometer in which the distance between two faces of two glass plates with parallel faces supported by a cylindrical brace varies according to the different coefficients of expansion of each of these two plates.

9. Interferometric sensor according to claim 1, wherein it is homonegeous, serial and of the bi-refractive type and wherein the two interferometers are in series and use a single luminous beam originating from an optical fiber placed at the focal point of a collimator lens, the first interferometer being constituted by one polarizer and one bi-refractive plate whose bi-refractive power mainly varies according to the pressure, the second interferometer on the luminous path being formed of one second polarizer and one second bi-refractive plate whose bi-refractive power varies according to the temperarure so as to create a resultant ribbed spectrum which is focussed on the optical fiber by the collimator lens.

10. Interferometric optical device for measuring multiple physical quantities able to create difference variations of optical paths, said device being of the type comprising :
   - an emitting device (a) including at least one source with a wide spectral band ;
   - a detector (c) constituted by at least one mixed or homogeneous interferometric sensor with two interferometers (5, 6) in series or in parallel according to any one of claims 2 to 9 creating a composite ribbed spectrum of the working differences Dc1, Dc2 due to each of these interferometers ;
   - a set (b) of optical fibers for carrying the luminous flow of the emitting device (a) to the detector unit (c) and the luminous flow reflected by the detecting unit ;
   - an analysis device (d) for analysing the information borne by the luminous flow originating from the detecting unit and drawing up a value representative of the measured physical quantities, said analysis device including :
   - a twin-wave measuring interferometer including one inlet collimator (109) illuminated by the extremity (z) of the optical fiber, a reference mirror M1 (169) on which one portion of the collimated luminous flow is reflected by the twin-interferometer sensor and a second mirror M2 (129) on which the other portion of said collimated luminous flow is reflected, and means to have interferred the two flows reflected on the mirrors M1 and M2 and provide at the outlet a resultant luminous flow ;
   - a photoelectric detector (149) able to measure the intensity of the luminous flow originating from the measuring interferometer and supply a signal representative of said intensity, and
   - a unit (e) for processing the signal derived from the photoelectric detector furnishing a value representative of the physical quantities, wherein the mirror M2 of the measuring interferometer is secured to a piezoelectric measuring micropositioner (159) for finely moving the mirror M2 and accurately measure the corresponding movement, and wherein the processing unit is connected, not only to the photoelectric detector, but also to the measuring micropositioner so as to pilot and determine the absolute position of the mirror M2 corresponding to the luminous intensity maximum received on the photoelectric detector and deduce from it the values of the working differences Dc1, Dc2 required for drawing up the sought-after physical quantity or quantities.

11. Device according to claim 10, wherein the mirror M2 of the measuring interferometer is mounted on one or several measuring micropositioners with at least one of said micropositioners being used for measuring, the other or others making it possible to offset the zero of the measuring interferometer.

12. Device according to claim 10, wherein plates or sets of plates (189) and (179) with similar thicknesses are disposed and placed in front of the mirrors HI and M2 of the measuring interferometer so as to create an optical path difference according to the difference of the thicknesses of the plates placed in front of the mirror M1 and the mirror M2.

13. Device according to claim 10, wherein a plate (189) or (179) is placed in front of one of the mirrors M1 or M2 so as to offset the zero of the measuring interferometer when the required offsetting is important.

14. Device according to any one of claims 10 to 13, wherein the detector (C) comprises several interferometric sensors for measuring at several points one or several physical quantities.

15. Device according to any one of claims 10 to 14, wherein the emitting device (a) is formed of a single light-emitting elementary source continuously fed and illuminated by a commutator (94) placed in front of a branch set of optical fibers, said unit being formed of as many fibers (95-1 to 95-n) as interferometric sensors (96-1 to 96-n), and wherein the commutator (95) is controlled so as to selectively have each of the ribbed spectrums delivered by each interferometric sensor (96) appear one by one in front of a fiber (97) illuminating the inlet collimator (10) of the measuring interferometer (98).

16. Device according to claims 10 to 14, wherein the emitting device is accordingly formed of elementary sources (81-1 to 81-n) successively fed cyclically or able to be programmed so as to supply via a set of optical channels (82, 83, 84) the luminous flow to a set of sensors (85), and, via a set of return optical channels (84, 83, 86), supply the luminous flow to a concentrator (87) for presentation at the inlet collimator (10) of the measuring interferometer (88).

17. Device according to claims 10 to 14, wherein the emitting device with a wide spectral band is constituted by one elementary source or several different elementary sources with wide spectrums so as to enlarge the spectral band, each source having one maximum centered on the fiber attenuation minimum.

18. Device according to claim 17, wherein the emitting device is constituted by one first electroluminescent diode whose spectrum is centered on the total reflection wavelength of a dichroic plate (73) and by a second diode (72) whose spectrum is centered on the total transmission wavelength of the dichroic plate.

19. Device according to claim 16, wherein the branches of the optical return fibers are glued and united into a circular bundle whose surface perpendicular to the axis of the fibers is straightened and polished.

20. Device according to claim 16, wherein the concentrator (87) is formed of a fiber with a decreasing section with a slight angle and an inlet section (870) larger than the section of the bundle of return fibers (86), said fiber being embodied via the stretching of a glass bar, for example.

21. Device according to any one of claims 15, 16, 17 or 19, wherein several measuring interferometers (102) are coupled in star-shaped fashion at the outlet of a discharger (103) and able to be switched so as to improve the availability of the analysis device.

22. Application of the device according to claim 10 for the measurement of two different physical quantities effected at the same measuring point, at least one quantity being used to correct the fundamental physical quantity.

**23.** Interferometric sensor according to any one of claims 1 to 9, wherein each of the interferometers is formed of optical elements having a coefficient of reflection of between 0.95 and 0.4.

**Patentansprüche**

**1.** Interferenzmeßgerät, dadurch gekennzeichnet, daß es zwei Interferometer in einem luftdichten Vakuumgehäuse (116) besitzt, von denen das erste Interferometer eine der Gehäuseseiten bildet und zur Bildung eines Signals für zwei physische Parameter dient, und das zweite Interferometer sich in dem luftdichten Vakuumgehäuse befindet und zur Bildung eines Signals für einen einzigen physischen Parameter dient.

**2.** Interferenzmeßgerät nach Patentanspruch 1, dadurch gekennzeichnet, daß es parallel, homogen und vom Typ Fabry-Pérot ist, daß die beiden Interferometer parallel angeordnet sind und zentrale (A) und äußere (B) konzentrische Lichtstrahlen verwenden, die von einem Lichtwellenleiter kommen, der im Brennpunkt einer Kollimatorlinse (19) liegt, wobei das erste Interferometer, das einen zentralen Lichtstrahl (A) verwendet, eine verformbare Membran (115) besitzt, deren Verformung druck- und temperaturabhängig ist, indem ihre Stellung je nach Druck bzw. Temperatur gegenüber einer ersten Glasplatte (13) mit parallelen Flächen verändert wird, und daß das zweite Interferometer, das auf dem äußeren Lichtstrahl (B) liegt, so beschaffen ist, daß der Abstand zwischen den Flächen von zwei von einem zylindrischen Zwischenstück (15) festgehaltenen Glasplatten mit parallelen Flächen (16, 17) in Abhängigkeit vom jeweiligen Dehnungsfaktor jeder der beiden Glasplatten (16, 17) schwankt und die Kollimatorlinse (19), mit der die beiden Lichtbündel auf einen Lichtwellenleiter (113) fokussiert werden, wobei die beiden Lichtbündel unterschiedlich verlaufen, indem jedes Lichtbündel ein geriffeltes Spektrum erzeugt, das sich zum Lichtwellenleiter (113) hin rekombiniert und additioniert.

**3.** Interferenzmeßgerät nach Patentanspruch 1, dadurch gekennzeichnet, daß es kombiniert, parallel, birefringent und vom Typ Fabry-Pérot ist, daß die beiden Interferometer parallel angeordnet sind und zentrale (A) und äußere (B) konzentrische Lichtstrahlen verwenden, die von einem Lichtwellenleiter kommen, der im Brennpunkt einer Kollimatorlinse (19) liegt, wobei das erste Interferometer, das einen zentralen Lichtstrahl (A) verwendet, eine verformbare Membran (115) besitzt, deren Verformung druck- und temperaturabhängig ist, indem ihre Stellung je nach Druck bzw. Temperatur gegenüber einer ersten Glasplatte mit parallelen Flächen verändert wird, und daß das zweite Interferometer, das auf dem äußeren Lichtstrahl (B) liegt, von einem Polarisator und einer birefringenten Glasplatte gebildet ist, wobei die Birefringenz in Abhängigkeit von der Temperatur schwankt und ein geriffeltes Spektrum erzeugt wird, das durch die Kollimatorlinse (19) zum zentralen Lichtwellenleiter hin rekombiniert und additioniert wird.

**4.** Interferenzmeßgerät nach Patentanspruch 1, dadurch gekennzeichnet, daß es kombiniert, parallel, birefringent und vom Typ Fabry-Pérot ist und daß die beiden parallel angeordneten Interferometer zentrale (A) und äußere (B) konzentrische Lichtstrahlen verwenden, die von einem Lichtwellenleiter kommen, der im Brennpunkt einer Kollimatorlinse (19) liegt, wobei das erste Interferometer, das einen zentralen Lichtstrahl (A) verwendet, von einem Polarisator und einer birefringenten Glasplatte gebildet ist, wobei die Birefringenz in Abhängigkeit vom Druck schwankt, und daß das zweite Interferometer, das auf dem äußeren Lichtstrahl (B) liegt, so beschaffen ist, daß der Abstand zwischen den Flächen von zwei von einem zylindrischen Zwischenstück (15) festgehaltenen Glasplatten mit parallelen Flächen in Abhängigkeit vom jeweiligen Dehnungsfaktor jeder der beiden Glasplatten schwankt.

**5.** Interferenzmeßgerät nach Patentanspruch 1, dadurch gekennzeichnet, daß es homogen, parallel und birefringent ist, daß die beiden Interferometer parallel angeordnet sind und zentrale (A) und äußere (B) konzentrische Lichtstrahlen verwenden, die von einem Lichtwellenleiter kommen, der im Brennpunkt einer Kollimatorlinse liegt, wobei das erste Interferometer, das einen zentralen Lichtstrahl (A) verwendet, von einem Polarisator und einer birefringenten Glasplatte gebildet ist, wobei die Birefringenz hauptsächlich in Anhängigkeit vom Druck schwankt, und daß das zweite Interferometer, das auf dem äußeren Lichtstrahl (B) liegt, von einem zweiten Polarisator und einer zweiten birefringenten Glasplatte gebildet ist, wobei deren Birefringenz in Abhängigkeit von der Temperatur schwankt und ein geriffeltes Spektrum erzeugt wird, das durch die Kollimatorlinse mit dem geriffelten Spektrum des zentralen Lichtbündels rekombiniert und additioniert wird.

6.  Interferenzmeßgerät nach Patentanspruch 1, dadurch gekennzeichnet, daß es homogen, in Reihe angeordnet und birefringent ist, daß die beiden Interferometer in Reihe angeordnet sind und eine einziges Lichtbündel verwenden, das von einem Lichtwellenleiter kommt, der im Brennpunkt einer Kollimatorlinse (211) liegt, wobei das erste Interferometer, das einen zentralen Lichtstrahl (A) verwendet, eine verformbare Membran (215) besitzt, deren Verformung druck- und temperaturabhängig ist, indem ihre Stellung je nach Druck bzw. Temperatur gegenüber der ersten Glasplatte (23) mit parallelen Flächen so verändert wird, daß ein unterschiedlicher charakteristischer Lichtweg je nach Lage der Membran erzeugt und ein geriffeltes Spektrum der Lichtquelle gebildet wird, und das zweite Interferometer, das auf dem äußeren Lichtbündel liegt, von einem Polarisator (27) und einer birefringenten Glasplatte (26) gebildet ist, wobei die Birefringenz in Abhängigkeit von der Temperatur schwankt und nach zweimaligem Durchlaufen des Lichtbündels hin und zurück durch den unterschiedlichen Lichtweg ein geriffeltes Spektrum entsteht, das das Produkt der geriffelten Spektren der beiden Interferometer ist und über die Kollimatorlinse (211) auf den Lichtwellenleiter (213) fokussiert wird.

7.  Interferenzmeßgerät nach Patentanspruch 1, dadurch gekennzeichnet, daß es kombiniert, in Reihe angeordnet, vom Typ Fabry Pérot und birefringent ist, daß die beiden Interferometer in Reihe angeordnet sind und eine einziges Lichtbündel verwenden, das von einem optischen Filter kommt, der im Brennpunkt einer Kollimatorlinse liegt, wobei das erste Interferometer, das einen zentralen Lichtstrahl verwendet, eine verformbare Membran besitzt, deren Verformung druck- und temperaturabhängig ist, indem ihre Stellung je nach Druck bzw. Temperatur gegenüber der ersten Glasplatte mit parallelen Flächen so verändert wird, daß ein unterschiedlicher charakteristischer Lichtweg je nach Lage der Membran erzeugt und ein geriffeltes Spektrum der Lichtquelle gebildet wird, und das zweite Interferometer, bei dem der Abstand zwischen den Flächend er beiden Glasplatten mit parallelen Flächen in Abhängigkeit vom jeweiligen Dehnungsfaktor jeder der beiden Glasplatten schwankt und das dabei entstehende geriffelte Spektrum durch die Kollimatorlinse auf einen Lichtwellenleiter fokussiert wird.

8.  Interferenzmeßgerät nach Patentanspruch 1, dadurch gekennzeichnet, daß es kombiniert, in Reihe angeordnet, vom Typ Fabry Pérot und birefringent ist, daß die beiden Interferometer in Reihe angeordnet sind und eine einziges Lichtbündel verwenden, das von einem Lichtwellenleiter kommt, der im Brennpunkt einer Kollimatorlinse liegt, wobei das erste Interferometer von einem Polarisator und einer birefringenten Glasplatte gebildet ist, wobei die Birefringenz hauptsächlich in Abhängigkeit vom Druck schwankt, und daß das zweite Interferometer, das auf dem äußeren Lichtstrahl liegt, so beschaffen ist, daß der Abstand zwischen den Flächen von zwei von einem zylindrischen Zwischenstück festgehaltenen Glasplatten mit parallelen Flächen in Abhängigkeit vom jeweiligen Dehnungsfaktor jeder der beiden Glasplatten schwankt.

9.  Interferenzmeßgerät nach Patentanspruch 1, dadurch gekennzeichnet, daß es homogen, in Reihe angeordnet und birefringent ist, daß die beiden Interferometer in Reihe angeordnet sind und eine einziges Lichtbündel verwenden, das von einem Lichtwellenleiter kommt, der im Brennpunkt einer Kollimatorlinse liegt, wobei das erste Interferometer von einem Polarisator und einer birefringenten Glasplatte gebildet ist, wobei die Birefringenz hauptsächlich in Abhängigkeit vom Druck schwankt, und daß das zweite Interferometer, das auf dem äußeren Lichtstrahl liegt, von einem zweiten Polarisator und einer zweiten birefringenten Glasplatte gebildet ist, wobei deren Birefringenz in Abhängigkeit von der Temperatur schwankt und ein geriffeltes Spektrum erzeugt wird, das durch die Kollimatorlinse auf den Lichtwellenleiter fokussiert wird.

10. Optisches Interferenzmeßgerät zur Messung vielfältiger physikalischer Größen, die zu Schwankungen der Lichtwege führen können, bestehend aus
    - einer Sendevorrichtung (a) mit mindestens einer Strahlenquelle mit breitem Spektralband,
    - einem Detektor (c) aus mindestens einem kombinierten oder homogenen Interferenzmeßgerät mit zwei in Reihe oder parallel angeordneten Interferometern (5, 6) nach Patentanspruch 2 bis 9, wodurch ein zusammengesetztes geriffeltes Spektrum aus den unterschiedlichen Lichtwegen $D_{c1}$, $D_{c2}$ der beiden Interferometer gebildet wird,
    - einer Anzahl Lichtwellenleiter (b) zur Übertragung des Lichtstroms von der Lichtquelle (a) zur Detektoreinheit (c) sowie des von dieser reflektierten Lichtstroms,

- einer Auswertevorrichtung (d) zum Auswerten der vom Lichtstrom von der Detektoreinheit übertragenen Informationen und Erstellen von repräsentativen Werten für die gemessenen physikalischen Größen, wobei die Auswertevorrichtung aus folgenden Teilen besteht:
- einem Meß-Interferometer für zwei Wellenarten mit einem Eintrittskollimator (109), der vom Ende des Lichtwellenleiters (z) bestrahlt wird, einem Bezugsspiegel M1 (169), an dem ein Teil des von dem aus zwei Interferometern bestehenden Interferenzmeßgerät gelieferten und durch den Kollimator fokussierten Lichtflusses reflektiert wird, einem zweiten Spiegel M2 (129), an dem der andere Teil des wie o.a. gelieferten und durch den Kollimator fokussierten Lichtflusses reflektiert wird sowie Mitteln zum Interferieren der beiden an den Spiegeln M1 und M2 reflektierten Lichtflüsse und deren Zusammenlegung zu einem gemeinsamen Lichtfluß am Austritt,
- einem photoelektrischen Detektor (149) zur Messung der Intensität des aus dem Meß-Interferometer kommenden Lichtflusses und Angeben eines repräsentativen Wertes für die Intensität und
- einer Signalaufbereitungseinheit (e) für das vom photoelektrischen Detektor gelieferten repräsentativen Wertes für die physikalischen Größen, **dadurch gekennzeichnet, daß** der Spiegel M2 des Meß-Interferometers auf einem piezoelektrischen Mikropositionier- und -meßgerät (159) befestigt ist, um die Stellung des Spiegels M2 fein verändern und die entsprechende Verlagerung genau messen zu können, daß die Signalaufbereitungseinheit nicht nur an den photoelektrischen Detektor, sondern auch an das piezoelektrische Mikropositionier- und -meßgerät angeschlossen ist, um die absolute Stellung des Spiegels M2 zu steuern und zu bestimmen, der dem Höchstwert der von dem photoelektrischen Detektor gemessenen Lichtstärke entspricht und daraus die Werte für die unterschiedlichen Lichtwege $D_{c1}$, $D_{c2}$ abzuleiten, die zum Erstellen der gesuchten physikalischen Größe(n) erforderlich sind.

11. Vorrichtung nach Patentanspruch 10, dadurch gekennzeichnet, daß der Spiegel M2 (129) des Meß-Interferometers auf einem oder mehreren Mikropositionier- und -meßgeräten angebracht ist, von denen mindestens eines zum Messen und das bzw. die anderen zum Verlagern des Nullpunktes des Meß-Interferometers dienen.

12. Vorrichtung nach Patentanspruch 10, dadurch gekennzeichnet, daß Glasplatten oder Glasplattensätze (189) und (179) ähnlicher Stärke vor den Spiegeln M1 und M2 des Meß-Interferometers angebracht sind, um unterschiedliche Lichtwege je nach Stärke der vor den Spiegeln M1 bzw. M2 angebrachten Glasplatten zu erzeugen.

13. Vorrichtung nach Patentanspruch 10, dadurch gekennzeichnet, daß eine Glasplatte (189) vor einem der Spiegel M1 oder M2 des Meß-Interferometers angebracht ist, um den Nullpunkt des Meß-Interferometer zu verlagern, wenn die erforderliche Verlagerung groß ist.

14. Vorrichtung nach Patentanspruch 10, dadurch gekennzeichnet, daß der Detektor (c) aus mehreren Interferenzmeßgeräten besteht, um eine oder mehrere physikalische Größen an mehreren Punkten zu messen.

15. Vorrichtung nach einem der Patentansprüche 10 bis 14, dadurch gekennzeichnet, daß die Sendevorrichtung (a) aus einer einzigen elementaren Lichtstrahlenquelle (91) besteht, die ständig gespeist wird und einen Schalter (94) anstrahlt, der sich vor einem Bündel von Lichtwellenleitern befindet, deren Anzahl der Anzahl (95-1 bis 95-n) der verwendeten Interferenzmeßgerät (96-1 bis 96-n) entspricht, und daß durch das Umschalten des Schalters (95) jedes der von den einzelnen Interferenzmeßgeräten (96) gelieferten geriffelten Spektren dem Lichtwellenleiter (97) zugeleitet werden kann, der das Lichtbündel an den Kollimator (10) am Eintritt des Meß-Interferometers (98) überträgt.

16. Vorrichtung nach Patentanspruch 10, dadurch gekennzeichnet, daß die Sendevorrichtung aus einer bestimmten Anzahl elementarer Strahlenquellen (81-1 bis 81-n) besteht, die periodisch oder in vorprogrammierter Reihenfolge nacheinander gespeist werden, um den Lichtfluß über eine Gruppe von Lichtkanälen (82, 83, 84) an eine Gruppe von Sensoren (85) und den reflektierten Lichtfluß über eine weitere Gruppe von Lichtkanälen (84, 83, 86) an einen Konzentrator (87) und so das Lichtbündel an den Kollimator (10) am Eintritt des Meß-Interferometers (88) zu übertragen.

17. Vorrichtung nach einem der Patentansprüche 10 bis 14, dadurch gekennzeichnet, daß die Sendevorrichtung von Strahlen mit breitem Spektralband aus einer einzigen oder mehreren elementaren Strahlenquellen mit breiten Spektren besteht, wodurch das Spektralband erweitert wird, wobei jede Strahlenquelle eine Höchststrahlung besitzt, die auf die Mindestdämpfung des Lichtwellenleiters konzentriert ist.

18. Vorrichtung nach Patentanspruch 17, dadurch gekennzeichnet, daß die Sendevorrichtung aus einer ersten Leuchtdiode (71) besteht, deren Spektrum auf die Gesamtrefektionswellenlänge einer dichroitischen Glasplatte (73) zentriert ist, sowie aus einer zweiten Leuchtdiode (72), deren Spektrum auf die Gesamtübertragungswellenlänge einer dichroitischen Glasplatte zentriert ist.

19. Vorrichtung nach Patentanspruch 16, dadurch gekennzeichnet, daß die rückführenden Lichtwellenleiter (86) in runden Bündeln zusammengefaßt und verklebt sind, deren senkrechte Oberfläche geschliffen und poliert ist.

20. Vorrichtung nach Patentanspruch 16, dadurch gekennzeichnet, daß der Konzentrator (87) aus einem Lichtwellenleiter mit in geringem Winkel abnehmendem Querschnitt besteht, dessen Querschnitt am Eintritt (870) größer ist als der Querschnitt des Bündels der rückführenden Lichtwellenleiter (86) und z.B. durch Ziehen eines Glasstabes hergestellt wird.

21. Vorrichtung nach Patentanspruch 15, 16, 17 oder 19, dadurch gekennzeichnet, daß mehrere Meß-Interferometer (102) am Austritt einer Verzweigung (103) sternförmig gekoppelt und zusammenschaltbar angeordnet sind, um die Verfügbarkeit der Auswertevorrichtung zu verbessern.

22. Anwendung der Vorrichtung nach Patentanspruch 10 zum Messen von zwei unterschiedlichen physikalischen Größen an ein und demselben Meßpunkt, wobei mindestens eine zur Korrektur der physikalischen Grundgröße dient.

23. Interferenzmeßgerät nach einem der Patentansprüche 1 bis 9, dadurch gekennzeichnet, daß jedes der Interferometer mit optischen Teilen ausgerüstet ist, deren Reflexionskoeffizient zwischen 0,95 und 0,4 liegt.

FIG.1

FIG.2

EP 0 347 277 B1

FIG.3

FIG.4

FIG.7

FIG.10

I (UNITE ARBITRAIRE)

50

0

$D_C$

$D_M$

## FIG.5

I (UNITE ARBITRAIRE)

60

61

62

0

$D_C$

$D_M$

## FIG.6

FIG.8

FIG.9

I(UNITE ARBITRAIRE)

$D_C$

$D_M$

0

## FIG.11

I(UNITE ARBITRAIRE)

$D_{C_1}$

$D_{C_2}$

$D_M$

0

## FIG.12